# EUROPÄISCHE PATENTSCHRIFT

(11) **EP 0 917 364 B1**
(45) Veröffentlichungstag und Bekanntmachung des Hinweises auf die Patenterteilung: **27.12.2006**
(21) Anmeldenummer: 98119592.8
(22) Anmeldetag: 16.10.1998
(51) Int. Cl.: H04N 7/14

(54) **Headset und Fernwartungs-und Videokonferenzsystem**
Headset and system for remote maintenance and videoconferencing
Casque téléphonique et système d'entretien à distance et de vidéoconférence

(30) Priorität: 14.11.1997 DE 19750492
(43) Veröffentlichungstag der Anmeldung: 19.05.1999
(73) Patentinhaber: Deutsche Telekom AG, 53113 Bonn (DE)
(72) Erfinder: Fenselau, Ulrich, Dipl.-Ing., 53177 Bonn (DE)

(56) Entgegenhaltungen:
- US-A- 4 605 959
- PATENT ABSTRACTS OF JAPAN vol. 018, no. 455 (E-1595), 24. August 1994 (1994-08-24) & JP 06 141308 A (HITACHI LTD), 20. Mai 1994 (1994-05-20)
- PATENT ABSTRACTS OF JAPAN vol. 1997, no. 09, 30. September 1997 (1997-09-30) & JP 09 116473 A (NIPPON TELEGR &TELEPH CORP <NTT>), 2. Mai 1997 (1997-05-02)

## Beschreibung

Die Erfindung betrifft ein Headset, insbesondere zur Anwendung innerhalb eines Fernwartungs- bzw. Videokonferenzsystems, gemäß dem Oberbegriff von Anspruch 1 sowie ein Fernwartungs- und Videokonferenzsystem, bestehend aus einer Zentrale und wenigstens einem Headset sowie Mitteln zur Datenübertragung zwischen Headset und Zentrale.

Es ist bekannt, Instandsetzungs- und Wartungsarbeiten an komplexen Maschinen und Anlagen von am Standort verfügbaren Wartungstechnikern durchführen, die Techniker jedoch durch Spezialisten in einer Zentrale unterstützen zu lassen. Durch den Einsatz eines Fernwartungssystems, bestehend aus einer Zentrale und wenigstens einem Headset sowie Mitteln zur Datenübertragung zwischen Headset und Zentrale, können komplexe Wartungs- und Reparaturaufgaben mit geringem vorherigem Schulungsaufwand zur Ausbildung der Wartungstechniker erledigt werden, da der Spezialist in der Zentrale den Techniker vor Ort durch mündliche Anweisungen unterstützen kann. Derartige Fernwartungssysteme kommen beispielsweise für die Wartung oder Instandsetzung teurer Maschinenparks oder Produktionsstrecken weltweit zum Einsatz, bei denen es unwirtschaftlich ist, für sämtliche zu tätigenden Aufgaben einen Spezialisten vor Ort auszubilden bzw. einfliegen zu lassen.

Der Techniker, der vor Ort die Arbeiten durchzuführen hat, wird mit einem Headset ausgerüstet, um mit dem Spezialisten in einer Zentrale kommunizieren zu können. Diese Headsets enthalten Mikrofon, Lautsprecher und eine Miniatur-Videokamera, welche in der Regel in einen lärmdichten Gehörschutz integriert sind. Innerhalb des Fernwartungssystems sind der Wartungstechniker und der Spezialist über eine Datenleitung oder drahtlos derart verbunden, daß beide miteinander sprechen können und zusätzlich der Spezialist in der Zentrale auf einem Monitor das Bild der Kamera sieht, welches dem Blickfeld des Technikers entspricht. Zur Herstellung der Kommunikationsverbindung zwischen Techniker und Spezialist bzw. zwischen Headset und Zentrale werden bekannte Telekommunikationstechnologien verwendet. Vom Headset werden Bild und Sprache beispielsweise zu einer Datenverarbeitungsanlage vor Ort übertragen und dort über eine Telefonleitung, vorzugsweise ISDN-Leitung, oder über Satellit weiter zur Zentrale gesendet. Weiterhin ist auch ein direkter Anschluß des Headsets sowie der Zentrale an das terrestrische Telefonnetz möglich.

Schwierigkeiten ergeben sich bei den bekannten Fernwartungssystemen allerdings dadurch, daß die zu wartenden, instandzusetzenden oder anders zu manipulierenden technischen Produkte oftmals sehr kompliziert sind. Es bedeutet daher einen erheblichen Zeitaufwand, die auszuführenden Arbeitsschritte mündlich so präzise zu beschreiben, daß der Techniker vor Ort aufgrund dieser Anweisungen die entsprechenden Handgriffe korrekt ausführen kann. Die daraus resultierenden Ausfallzeiten der zu wartenden Anlagen können große wirtschaftliche Verluste bedeuten. Weiterhin ist auch die Gefahr eines Mißverständnisses gegeben. Je nach Art der auszuführenden Arbeiten kann dieses schwere Sachschäden verursachen oder eine Gefährdung der Gesundheit der vor Ort beteiligten Personen mit sich bringen, insbesondere bei Arbeiten im Gefahrenbereich wie z.B. beim Entschärfen einer Bombe.

Es ist weiterhin bekannt, im medizinischen Bereich, insbesondere bei komplizierten Operationen, zu deren Durchführung kein spezialisierter Arzt vorhanden ist, Videokonferenzsysteme einzusetzen und auf diese Weise einen entfernten Spezialisten zur Beratung und Hilfestellung hinzuzuziehen. Der entfernte Spezialist sieht dabei ebenfalls auf einem Monitor das von einer Kamera vor Ort aufgezeichnete Bild der Behandlungsstelle, z.B. das zu behandelnde Körperteil bzw. die Operationswunde, und kann durch mündliche Anweisungen, die zu den behandelnden Ärzten übertragen werden, diese unterstützen, beraten und mit ihnen kommunizieren. Auch in diesem Fall sind eine schnelle, präzise Verständigung über die zu tätigenden Handgriffe sowie die Vermeidung von Mißverständnissen essentiell für das Wohl des Patienten.

Der Erfindung liegt daher die Aufgabe zugrunde, ein Headset sowie ein Fernwartungs- bzw. Videokonferenzsystem zur Verfügung zu stellen, welches eine schnellere und präzisere Anleitung eines Handelnden zur Ausführung bestimmter Tätigkeiten vor Ort ermöglicht und somit zur Vermeidung von Fehlhandlungen, die Gefahren für die Gesundheit der Beteiligten sowie Sachschäden verursachen können, und zur Reduzierung von Ausfallkosten einer technischen Anlage beiträgt.

Diese Aufgabe wird gelöst durch ein Headset, insbesondere zur Anwendung innerhalb eines Fernwartungssystems, eine Spracheinheit mit Mikrofon und Lautsprecher und eine Kamera aufweisend, wobei akustische Signale am Mikrofon ein- bzw. am Lautsprecher ausgegeben, Bilddaten mit der Kamera aufgezeichnet sowie sämtliche Daten drahtlos oder über eine Datenleitung übertragen werden, welches folgende Merkmale aufweist:
a) eine Signalisierungseinheit mit einem Laserpointer, welche entweder in das Headset fest integriert oder am Headset lösbar befestigt ist;
b) durch Steuersignale, die dem Headset übermittelt werden, ist die Signalisierungseinheit derart fernsteuerbar, daß die Strahlrichtung des Laserpointers veränderlich ist;
c) die Signalisierungseinheit ist im Anwendungsfall, auch in gelöstem Zustand, mit dem Headset derart gekoppelt, daß sie dem Headset übermittelte Steuersignale zu empfangen imstande ist.

Die Aufgabe wird weiterhin gelöst durch ein Fernwartungs- und Videokonferenzsystem unter Verwendung eines derartigen Headsets sowie einer Zentrale, wobei
a) die Zentrale ein Mikrofon, einen Lautsprecher und einen Monitor zur Ein- bzw. Ausgabe von akustischen Informationen sowie zur Visualisierung von Bilddaten aufweist;
b) Headset und Zentrale zur Datenübertragung drahtlos oder über eine Datenleitung koppelbar sind,
c) im Betriebszustand am Mikrofon des Headsets eingegebene akustische Informationen an einem Lautsprecher in der Zentrale ausgegeben, an einem Mikrofon der Zentrale eingegebene akustische Informationen am Lautsprecher des Headsets ausgegeben sowie von der Kamera des Headsets aufgezeichnete Bilddaten an einem Monitor in der Zentrale in Form eines Bildes dargestellt werden,
d) die Zentrale weiterhin ein Steuerelement aufweist, mit welchem die Signalisierungseinheit des Headsets fernsteuerbar ist, wobei Eingaben am Steuerelement oder Bewegung des Steuerelements entsprechende Steuerinformation erzeugen, die an die Signalisierungseinheit übermittelt wird.

Mit der fernsteuerbaren Signalisierungseinheit, die einen Laser enthält, gelingt es, im Blickfeld der handelnden Person, z.B. des Wartungstechnikers oder des behandelnden Arztes, einen Lichtpunkt zu erzeugen und zu bewegen. Die Bewegung dieses Lichtflecks wird vom entfernt befindlichen Spezialisten gesteuert und verdeutlicht im Dialog die Hinweise des Spezialisten. Dabei sieht der Spezialist in der Zentrale auf einem Monitor, auf welches Objekt der Laserpointer gerade gerichtet ist, und kann durch Eingabe entsprechender Steuersignale die Strahlrichtung des Laserpointers zur Markierung eines anderen Objektes verändern. Auf eine exakte mündliche Beschreibung der zu manipulierenden Komponenten durch den Spezialisten kann dadurch verzichtet werden, daß die betreffenden Komponenten durch Markierung mit dem Laserpointer hervorgehoben werden. Somit gelingt eine wesentlich schnellere und präzisere Fernanweisung der handelnden Person.

Durch die Möglichkeit einer schnelleren Anleitung eines Technikers mittels des erfindungsgemäßen Systems gelingt es, Ausfallzeiten für die Wartung oder Instandsetzung komplizierter technischer Anlagen zu vermindern. Weiterhin kann in gefährlichen Situationen, z.B. bei der Entschärfung einer Bombe, die Zahl der Personen sowie deren Aufenthaltszeit im Gefahrenbereich vermindert werden. Im Bereich der Telemedizin kann ein entfernt praktizierender spezialisierter Arzt dem Therapeuten vor Ort präzisere Hinweise zu Diagnose und Therapie geben.

Die Signalisierungseinheit des Headsets weist zur Veränderung der Strahlrichtung des Laserpointers eine Positionierungseinheit auf. Diese ist entweder mechanisch mit dem Laserpointer gekoppelt und dient dazu, ferngesteuert durch die Steuersignale die Ausrichtung des Laserpointers im Raum zu verändern. Die Positionierungseinheit ist beispielsweise ein mit Schrittmotoren betriebenes Verschiebeelement. Alternativ ist der Laserpointer selbst nicht ortsveränderlich, sonderen die x-y-Strahlablenkung wird durch einen beweglichen Spiegel oder ein Spiegelsystem als Positionierungseinheit realisiert. Vorzugsweise ist die Positionierungseinheit imstande, die Ausrichtung des Laserpointers in wenigstens zwei Raumrichtungen zu verändern, so daß beliebige Punkte im Blickfeld des Technikers lasermarkiert werden können. Weiterhin vorteilhaft ist es, wenn der Laserpointer ferngesteuert ein- und ausgeschaltet sowie in einen blinkenden Zustand versetzt werden kann.

Um Veränderungen der Strahlrichtung des Laserpointers im Raum durch Bewegungen des Headsets zu vermeiden, ist es von Vorteil, wenn die Signalisierungseinheit am Headset lösbar befestigt ist und im Anwendungsfall vom Headset gelöst in räumlicher Nähe zum Headset aufgestellt wird. Sie ist dann mit dem Headset durch eine Datenleitung verbunden, über welche die von der Zentrale dem Headset übermittelten Steuersignale an die Signalisierungseinheit weitergeleitet werden. Auf diese Weise wird die Strahlrichtung des Laserpointers nicht durch die Bewegungen des Technikers verfälscht, sondern hängt lediglich von den aus der Zentrale kommenden Steuersignalen ab.

Zur Stabilisierung der Strahlrichtung des Laserpointers einer fest mit dem Headset verbundenen Signalisierungseinheit weist das Headset vorzugsweise eine Stabilisierungseinheit, bestehend aus Bewegungssensor und Stabilisator, auf, mit welcher die Strahlrichtung des Laserpointers im Raum elektronisch stabilisiert wird und Bewegungen des Headsets durch Kopfbewegungen der handelnden Person kompensiert werden. Derartige Stabilisierungseinheiten sind bekannt und werden beispielsweise bei Videokameras angewendet.

Die Datenübertragung, also die Übertragung von Sprache, Bilddaten sowie Steuersignalen, zwischen Headset und Zentrale erfolgt drahtlos oder über eine Datenleitung unter Verwendung bekannter Telekommunikationssysteme. Drahtgebundene Datenübertragung erfolgt vorzugsweise mittels eines Telefonnetzes, insbesondere über eine ISDN-Verbindung. Dabei werde sämtliche Daten nach vorheriger Kodierung in ein geeignetes Übertragungssignal über einen gemeinsamen Datenkanal übertragen. Die Datenübertragung zwischen Headset und Zentrale kann auch teilweise oder ganz drahtlos erfolgen. Beispielsweise werden sämtliche Daten über ein Mobilfunknetz übertragen, welches einen Datenkanal mit auch für Videodaten ausreichender Übertragungskapazität zur Verfügung stellen muß. Zur Mobilfunkübertragung weisen Headset und Zentrale eine Sende- und Empfangseinheit auf, wie sie auch für gewöhnliche Mobiltelefone verwendet wird. Es ist weiterhin möglich, nur eine teilweise drahtgebundene Kommunikationsverbindung zwischen Headset und Zentrale aufzubauen, z.B. indem vom Headset Daten über Mobilfunk zu einem Funkumsetzer übertragen, in das Festnetz eingekoppelt und über das Festnetz zur Zentrale übertragen werden. Drahtlose Datenübertragung zumindest auf der Seite des Headsets hat den Vorteil, daß das Headset unabhängig von drahtgebundenen Kommunikationsnetzen, auch unabhängig von Festnetztelefonanschlüssen, ortsungebunden einsetzbar ist. So werden beispielsweise auch Wartungs- und Reparaturarbeiten im Freien möglich.

Vorteilhaft kann auch die Datenübertragung zwischen Headset und Zentrale über eine Übertragungsstation, insbesondere eine Datenverarbeitungsanlage, vorgenommen werden, welche sich in räumliche Nähe zum Headset befindet.

In der Zentrale wird vorteilhaft zur Ein- bzw. Ausgabe sowie zur Übertragung von akustischer Information und/oder Steuerinformation ein stationäres oder mobiles Telekommunikationsendgerät verwendet, gegebenenfalls in Verbindung mit einer entsprechenden Telefonanlage. Weiterhin wird zur Ein- bzw. Ausgabe von Fernsteuerbefehlen bzw. Bilddaten eine Datenverarbeitungsanlage, z.B. ein PC, verwendet. Der Monitor der Daten-verarbeitsungsanlage wird zur Darstellung und Online-Wiedergabe der vom Headset aufgezeichneten und übertragenen Videobilder verwendet. Als Steuerelement dienen Maus, Joystick und/oder die Tastatur der Datenverarbeitungsanlage. Dabei werden Eingaben am Steuerelement bzw. Bewegungen des Steuerelementes selbst, welche zur Ortsveränderung des Laserpointers dienen, vorzugsweise direkt auf dem Monitor visualisiert. Es ist weiterhin möglich, Bewegungen des Steuerelements nicht online in Steuerbefehle umzusetzen, sondern die einem Steuerbefehl entsprechende Soll-Position des Laserpointers zunächst auf dem Bildschirm darzustellen, z.B. durch Darstellung der Maus-Position über dem Videobild, und bei Erreichen der gewünschten Position das dementsprechende Steuersignal zu erzeugen und an das Headset zu übertragen.

Kurzbeschreibung der Zeichnung, wobei zeigen:
- Figur 1: das Prinzip des Informationsflusses zwischen Headset und Zentrale
- Figur 2: das Prinzip der Datenübertragung zwischen Headset und Zentrale sowie innerhalb der Zentrale
- Figur 3: ein Blockschaltbild eines Fernwartungs- bzw. Videokonferenz systems mit Headset und Zentrale

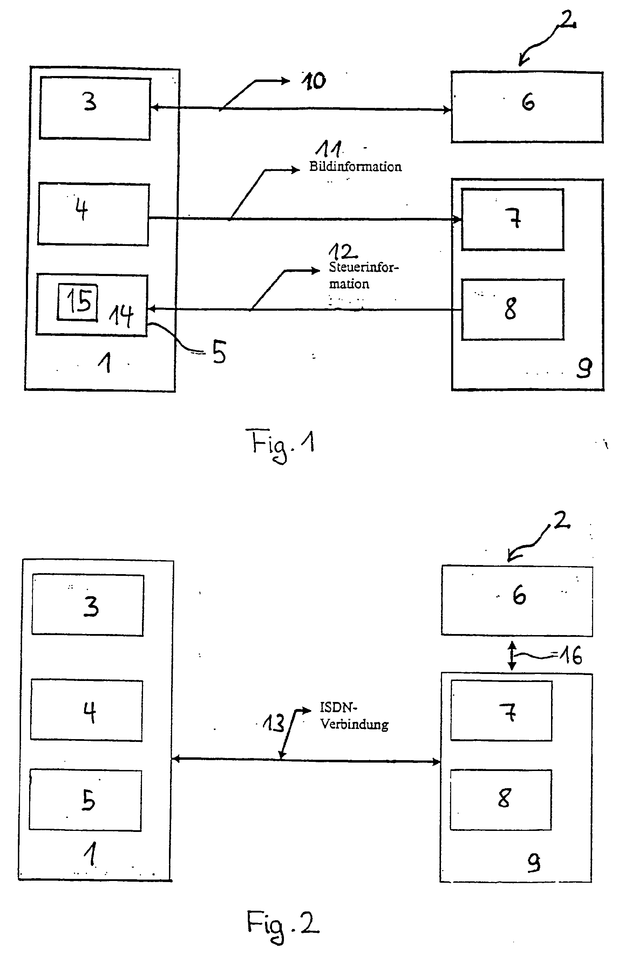

Figur 1 zeigt schematisch den Aufbau eines erfindungsgemäßen Fernwartungs- bzw. Videokonferenzsystems sowie den prinzipiellen Informationsfluß zwischen den einzelnen Komponenten des Systems.

Das Headset 1 weist eine Spracheinheit 3 mit Mikrofon und Lautsprecher sowie eine Kamera 4 auf. Dabei ist das Headset beispielsweise wie ein Kopfhörer ausgebildet, an welchem ein Mikrofon sowie die Kamera befestigt ist. Bei einem Videokonferenzsystem kann das Headset jedoch auch aus einer frei aufstellbaren Einheit mit Videokamera, Mikrofon und Lautsprecher bestehen, wobei die Kamera im Anwendungsfall auf die zu behandelnde Stelle gerichtet ist. Das Headset 1 weist erfindungsgemäß eine Signalisierungseinheit 5 mit einem Laserpointer 15 auf. Ein weiterer Bestandteil der Signalisierungseinheit 5 ist eine Positionierungseinheit 14, die mechanisch mit dem Laserpointer 15 gekoppelt ist und, ferngesteuert durch Steuersignale 12, die Ausrichtung des Laserpointers 15 im Raum zu verändern imstande ist. Die Positionierungseinheit 14 ist beispielsweise ein mit Schrittmotoren bewegliches Element, welches wenigstens in der Ebene senkrecht zur Ausrichtung der Kamera, also im Anwendungsfall meist zur Blickrichtung der handelnden Person, in zwei Raumrichtungen verfahrbar ist. Durch Übermittlung entsprechender Steuerinformationen an die Positionierungseinheit 15 gelingt somit die Bewegung des durch den Laserpointer erzeugten Lichtflecks im Blickfeld handelnden Person.

Die Zentrale 2 des erfindungsgemäßen Fernwartungs- bzw. Videokonferenzsystems besteht bei dem in den Figuren 1 und 2 gezeigten Beispiel aus einem Telefon 6 sowie einer Datenverarbeitungsanlage 9, die z.B. ein PC mit Zugang zum Telefonnetz ist. An dem Monitor 7 des PC werden die von der Kamera 4 des Headset 1 aufgezeichneten Bilder dargestellt. Die Maus oder ein Joystick dient als Steuerelement 8, mit welchem durch Eingabe von Steuerbefehlen oder durch Bewegen des Steuerelements Steuerinformation erzeugt wird, welche zur Fernsteuerung der Signalisierungseinheit 5 dient.

Auf der Seite des Headsets 1 wird die Steuerinformation 12 aufgeteilt in diejenige Information, welche die Positionierungseinheit 14 fernsteuert und somit zur Veränderung der Ausrichtung des Laserpointers 15 im Raum dient, und diejenige, welche den Laserpointer 15 selbst ansteuert, das heißt den Laserpointer ein- bzw. ausschaltet oder seinen Betriebsmodus verändert, z.B. zwischen Blinkbetrieb und kontinuierlichem Betrieb umschaltet.

Geprächsinformation wird zwischen der Spracheinheit 3 und dem auf der Seite der Zentrale angeordneten Telefon 6 bidirektional übertragen. Durch Übertragung der Sprachinformation 10 wird es ermöglicht, daß der mit dem Headset 1 ausgerüstete Techniker in gewohnter Weise mit einem Spezialisten in der Zentrale 2 telefonieren kann.

Die von der Kamera 4 erzeugte Bildinformation 11 wird an die Datenverarbeitungsanlage 9 in der Zentrale 2 übertragen und auf dem Monitor 7 dargestellt. Der Datenfluß erfolgt hier nur in einer Richtung, und zwar vom Headset 1 zur Zentrale 2.

Figur 2 zeigt die prinzipielle Kopplung der Komponenten des erfindungsgemäßen Fernanalysesystems über eine ISDN-Verbindung 13 zwischen Headset 1 und der Datenverarbeitungsanlage 9 der Zentrale 2 sowie innerhalb der Zentrale 2 über eine weitere Datenleitung zwischen Telefon 6 und der Datenverarbeitungsanlage 9.

Um Daten über ein Telefonnetz, insbesondere über einen ISDN-Kanal 13 übertragen zu können, weisen sowohl das Headset 1 als auch die Zentrale 2, hier insbesondere die Datenverarbeitungsanlage 9, Elemente zum Anschluß an ein Telefon-Festnetz auf. Weiterhin werden auf beiden Seiten sämtliche zu übertragende Informationen zu einem gemeinsamen Übertragungsignal zusammengefaßt und in ein über eine ISDN-Verbindung übertragbares Übertragungsformat gebracht sowie über einen ISDN-Kanal übertragen. Auf der Seite des Empfängers der entsprechenden Daten werden diese wieder dekodiert und den entsprechenden Elementen zugeführt: So wird auf der Seite der Zentrale 2 Bildinformation direkt auf dem Monitor 7 dargestellt sowie Gesprächsinformation über die Datenleitung 16 an das mit der Datenverarbeitungsanlage 9 gekoppelte Telefon 6 weitergeleitet. Auf der Seite des Headsets 1 wird Geprächsinformation an den Lautsprecher der Spracheinheit 3 sowie Steuerinformation an die Signalisierungseinheit 5 weitergeleitet. Umgekehrt wird auf der Seite des Headsets 1 die am Mikrofon der Spracheinheit 3 eingegebene akustische Information sowie die von der Kamera 4 aufgezeichneten Bilddaten zu einem Übertragungssignal zusammen gefaßt, welches auf Seiten der Zentrale entsprechend auf das Telefon 6 und dem Monitor 7 weiterverteilt wird.

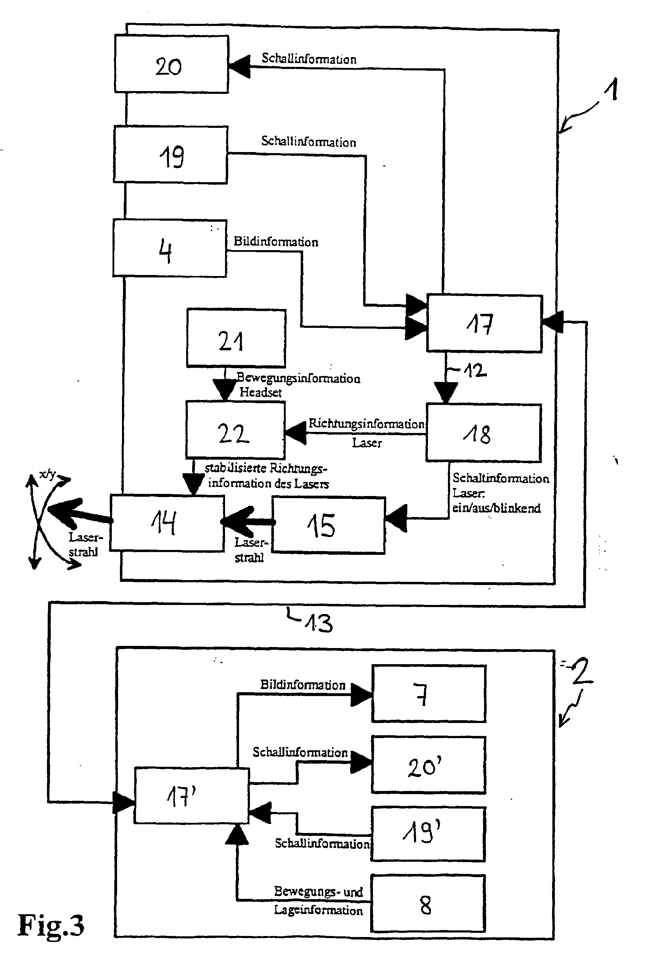

Figur 3 zeigt ein Blockschaltbild eines Fernwartungs- bzw. Videokonferenzsystems mit Headset 1 und Zentrale 2, die räumlich voneinander beabstandet und zur Informationsübertragung durch eine Datenleitung 13, z.B. über eine ISDN-Verbindung, gekoppelt sind.

Das Headset 1 weist eine Kamera 4, z.B. eine Video- oder CCD-Kamera, zur Aufzeichnung von Bilddaten sowie ein Mikrofon 19 und einen Lautsprecher bzw. Kopfhörer 20 zur Ein- bzw. Ausgabe von Schallinformation auf. Diese Elemente sind an einem kopfhörerähnlichen Gerät, dem Headset, derart angeordnet, daß das von der Kamera aufgezeichnete Bild dem Blickfeld des Nutzers des Headsets, der das Gerät im Einsatzfalle trägt, entspricht. Weiterhin befinden sich Lautsprecher 20 und Mikrofon 19 im Anwendungsfall im Bereich der Ohren bzw. des Mundes des Technikers, wodurch eine sichere und deutliche Kommunikation zwischen Headset und Zentrale ohne Verfälschung durch Umgebungsgeräusche gewährleistet ist.

Die Zentrale weist entsprechend zur Darstellung der von der Kamera 4 des Headsets 1 aufgezeichneten Bilddaten einen Bildschirm 7 auf, auf welchem im Einsatzfall das von der Kamera aufgenommene Bild online und vorzugsweise ohne Zeitverzögerung wiedergegeben wird. Der Spezialist in der Zentrale sieht damit zu jedem Zeitpunkt das Blickfeld des Nutzers des Headsets. Entsprechend werden die vom Headset 1 übermittelten Schallinformationen in der Zentrale 2 über einen Lautsprecher bzw. Kopfhörer 20' wiedergegeben und in der Zentrale 2 vom Spezialisten erzeugt Schallinformation mit einem Mikrofon 19' aufgezeichnet und an das Headset 1 übertragen. Die Zentrale ist beispielweise durch eine Datenverarbeitungsanlage mit Prozessor, Bildschirm, Maus, Sound-Eingabe- und Wiedergabemöglichkeiten realisiert.

Erfindungsgemäß ist das Headset mit einer Signalisierungseinheit mit einem Laserpointer 15 ausgestattet, dessen Strahlrichtung und Betriebsmodus durch in der Zentrale erzeugte Fernsteuersignale verändert wird. Im Einsatzfall ist der Laser 15 zunächst durch einen Fernsteuerbefehl, der mit einem Steuerelement 8, z.B. eine Computermaus, in der Zentrale eingegeben und in ein Steuersignal umgewandelt wird, aktivierbar. Er erzeugt in diesem Falle einen Lichtfleck im Blickfeld des Technikers, dessen Lage für den Spezialisten in der Zentrale auf dem Bildschirm 7 erkennbar ist. Durch Eingabe weiterer Bewegungsbefehle am Steuerelement 8, z.B. durch Bewegen der Maus, die in von der Signalisierungseinheit des Headsets verwertbare Steuerinformation umgerechnet werden, ist die Strahlrichtung des Lasers 5 veränderlich. Der Lichtfleck wird dadurch im Blickfeld des Technikers zur Markierung von Objekten und Verdeutlichung des Dialogs zwischen Spezialist und Techniker bewegt.

Sämtliche Daten, also Schall- und Bildinformation sowie Steuerinformation, werden zwischen Headset und Zentrale über einen gemeinsamen Datenkanal übertragen. Dazu weisen Headset 1 und Zentrale 2 jeweils eine Kodier-/Dekodiereinheit (CODEC) 17 bzw. 17' auf, welche sämtliche von den Komponenten des Headsets bzw. der Zentrale erzeugten Daten, gegebenenfalls nach einer vorausgehenden Digitalisierung, zu einem gemeinsamen Übertragungssignal zusammenfaßt, das über die jeweilige Datenleitung 13 übertragbar ist. Auf der Empfangsseite wird das Signal vom CODEC 17 bzw. 17' wieder in akustische Information, Bildinformation Steuerinformation aufgetrennt und auf die entsprechenden Wiedergabekomponenten bzw. zu steuernden Komponenten verteilt. In der Zentrale ist der CODEC 17' beispielsweise durch die Zentraleinheit des dort verwendeten PC realisiert. Mittels der Zentraleinheit des PC werden die vom Headset gesendeten Bildinformationen auf den Monitor 7 und die Schallinformationen auf den Lautsprecher 20' gegeben und sind damit vom Spezialisten wahrnehmbar.

Auf der Seite des Headsets werden die empfangenen Informationen von der Kodier-/Dekodiereinheit 17 in Schallinformation und Steuerinformation 12 aufgetrennt, wobei die Schallinformation in bekannter Weise dem Lautsprecher 20 zugeführt und durch diesen wiedergegeben wird. Die Steuerinformation enthält einerseits Signale, die den Betriebsmodus des Lasers 15 steuern, nämlich die Schaltinformation, andererseits Signale, die die Strahlrichtung des Lasers steuern, und zwar die Richtungsinformation. Die Steuersignale werden von einer Steuereinheit, die der Signalisierungseinheit zugeordnet ist, in Schaltinformation und Richtungsinformation aufgetrennt. Die Schaltinformation wird auf den entsprechenden Eingang des Laserpointers 15 gegeben. Somit kann der Laser ferngesteuert ein- und ausgeschaltet sowie in einen blinkenden Betriebszustand versetzt werden. Wurde der Laser eingeschaltet, erzeugt er einen Laserstrahl fester Strahlrichtung relativ zum Headset. Diese Strahlrichtung wird relativ zum Headset mittels der Positionierungseinheit 14, die von der Richtungsinformation gesteuert wird, verändert. Die Positionierungseinheit 14 ist hier beispielsweise eine Spiegelanordnung, die den Laserstrahl beim Durchtreten aus seiner Ursprungsrichtung ablenkt.

Damit die Strahlrichtung des Lasers 15 im Raum nicht durch Kopfbewegungen des Technikers und damit Bewegung des Headsets verändert wird und somit die stabile Markierung eines Objekts gefährdet ist, weist das Headset eine Stabilisierungseinheit, bestehend aus Bewegungssensor 21 und Stabilisator 22 auf. Der Bewegungssensor 21 ermittelt aus den Bewegungen des Headsets Bewegungsinformation, die als Korrektursignal an den Stabilisator geleitet wird. Diese Bewegungsinformation wird durch den Stabilisator mit der Richtungsinformation aus der Zentrale zu einem stabilisierten Richtungssignal verrechnet, bei welchem Bewegungen des Headsets kompensiert sind. Mit diesem stabilisierten Richtungssignal wird die Positionierungseinheit 14 angesteuert. Kommen keine Befehle zur Richtungsänderungen des Laserstrahls im Raum aus der Zentrale, so kompensiert die Stabilisierungseinheit durch das Erzeugen entsprechender Richtungsinformation gerade die Bewegungen des Headsets. Kommen Befehle zur Richtungsänderungen des Laserstrahls aus der Zentrale, so werden letztendlich auch nur diesen entsprechende Richtungsänderungen durch die Kompensation von Bewegungen des Headsets umgesetzt.

### Liste der Bezugszeichen:

- 1: Headset
- 2: Zentrale
- 3: Spracheinheit
- 4: Kamera
- 5: Signalisierungseinheit
- 6: Telefon
- 7: Monitor
- 8: Steuerelement (Maus)
- 9: DVA
- 10: akustische Information
- 11: Bildinformation
- 12: Steuerinformation
- 13: ISDN-Verbindung
- 14: Positionierungseinheit
- 15: Laserpointer
- 16: Datenleitung
- 17, 17': Kodier-/Dekodiereinheit (CODEC)
- 18: Steuereinheit
- 19, 19': Mikrofon
- 20, 20': Lautsprecher/Kopfhörer
- 21: Bewegungssensor
- 22: Stabilisator

## Patentansprüche

1. Headset (1), insbesondere zur Anwendung innerhalb eines Fernwartungs- bzw. Videokonferenzsystems, welches eine Spracheinheit (3) mit Mikrofon (19, 19') und Lautsprecher/Kopfhörer (20, 20') und eine Kamera (4) aufweist, wobei akustische Signale (10) am Mikrofon ein- bzw. am Lautsprecher/Kopfhörer ausgegeben, Bilddaten (11) mit der Kamera (4) aufgezeichnet sowie sämtliche Daten drahtlos oder über eine Datenleitung (13) übertragen werden,
**gekennzeichnet durch** folgende Merkmale:
a) eine Signalisierungseinheit (5) mit einem Laserpointer (15), welche entweder in das Headset (1) fest integriert ist oder am Headset (1) lösbar befestigt ist;
b) **durch** Steuersignale (12), die dem Headset (1) übermittelt werden, ist die Signalisierungseinheit (5) derart fernsteuerbar, daß die Strahlrichtung des Laserpointers veränderlich ist;
c) die Signalisierungseinheit (5) ist im Anwendungsfall, auch in gelöstem Zustand, mit dem Headset derart gekoppelt, daß sie dem Headset übermittelte Steuersignale zu empfangen imstande ist.

2. Headset nach Anspruch1, **dadurch gekennzeichnet,**
**daß** die Signalisierungseinheit (5) zur Veränderung der Strahlrichtung des Lasers (15) eine Positionierungseinheit (14) aufweist, welche, ferngesteuert durch die Steuersignale, dessen Strahlrichtung im Raum zu verändern imstande ist.

3. Headset nach Anspruch 2, **dadurch gekennzeichnet,**
**daß** die Positionierungseinheit (14) ein x-y-Verschiebetisch ist, welcher mechanisch mit dem Laser (15) gekoppelt ist, wobei durch Bewegungen des Verschiebetischs die Ausrichtung des Lasers (15) und somit die Laserstrahlrichtung im Raum verändlich ist.

4. Headset nach Anspruch 2, **dadurch gekennzeichnet,**
**daß** die Positionierungseinheit (14) ein fernsteuerbar beweglicher Spiegel oder ein Spiegelsystem ist, mittels dessen der Laserstrahl aus der ursprünglichen Strahlrichtung beim Austritt aus dem Laser (15) ablenkbar ist.

5. Headset nach einem der vorangegangenen Ansprüche, **dadurch gekennzeichnet,**
**daß** der Betriebsmodus des Laserpointers, z.B. ein/aus/blinkend, ferngesteuert veränderlich ist.

6. Headset nach einem der vorangegangenen Ansprüche, **dadurch gekennzeichnet,**
**daß** die vom Headset gelöste Signalisierungseinheit im Anwendungsfall in räumlicher Nähe zu Headset aufgestellt und mit dem Headset durch eine Datenleitung verbunden ist.

7. Headset nach einem der vorangegangenen Ansprüche, **dadurch gekennzeichnet,**
**daß** es eine Schnittstelle oder ein Anschlußkabel zum Anschluß an ein Telefon-Festnetz aufweist.

8. Headset nach einem der Ansprüche 1 bis 4, **dadurch gekennzeichnet,**
**daß** eine Sende- und Empfangseinheit zur drahtlosen Datenübertragung über ein Telefon-Mobilfunknetz aufweist.

9. Headset nach einem der vorangegangenen Ansprüche, **dadurch gekennzeichnet,**
**daß** es eine Kodier-/Dekodiereinheit (17) aufweist, mit welcher akustische Signale sowie Bilddaten, gegebenenfalls nach einer Digitalisierung, zur Übertragung über eine Telefonleitung, insbesondere über einen ISDN-Kanal, bzw. über eine Mobilfunkverbindung kodiert und in das entsprechende Übertragungsformat gebracht werden sowie dem Headset übermittelte Daten dekodiert und in akustische und Steuerinformation getrennt werden, die dem Lautsprecher bzw. der Signalisierungseinheit zugeführt werden.

10. Headset nach einem der vorangegangenen Ansprüche, **dadurch gekennzeichnet,**
**daß** das Headset eine Stabilisierungseinheit, bestehend aus Bewegungssensor (21) und Stabilisator (22) aufweist, mit der die Strahlrichtung des Laserpointers im Raum elektronisch stabilisiert wird und Bewegungen des Headsets kompensiert werden.

11. Fernwartungs- und Videokonferenzsystem unter Verwendung eines Headsets (1) nach einem der Ansprüche 1 bis 10 sowie einer Zentrale (2) und Mitteln zur Datenübertragung zwischen Headset und Zentrale, wobei
a) die Zentrale (2) ein Mikrofon (19'), einen Lautsprecher (20') und einen Monitor (7) zur Ein- bzw. Ausgabe von akustischen Informationen sowie zur Visualisierung von Bilddaten aufweist;
b) Headset und Zentrale zur Datenübertragung drahtlos oder über eine Datenleitung (13) koppelbar sind,
c) im Betriebszustand am Mikrofon (19) des Headsets (1) eingegebene akustische Informationen an einem Lautsprecher (20') in der Zentrale ausgegeben, an einem Mikrofon (19') der Zentrale eingegebene akustische Informationen am Lautsprecher (20) des Headsets ausgegeben sowie von der Kamera (4) des Headsets aufgezeichnete Bilddaten an einem Monitor (7) in der Zentrale in Form eines Bildes dargestellt werden,
d) die Zentrale weiterhin ein Steuerelement (8) aufweist, mit welchem die Signalisierungseinheit (5) des Headsets fernsteuerbar ist, wobei Eingaben am Steuerelement oder Bewegung des Steuerelements entsprechende Steuerinformation erzeugen, die an die Signalisierungseinheit übermittelt wird.

12. Fernwartungs- und Videokonferenzsystem nach Anspruch 11, **dadurch gekennzeichnet,**
**daß** die Datenübertragung zwischen Headset und Zentrale über eine Übertragungsstation, insbesondere eine Datenverarbeitungsanlage, erfolgt, welche sich in räumlicher Nähe zum Headset befindet.

13. Fernwartungs- und Videokonferenzsystem nach Anspruch 11 oder 12, **dadurch gekennzeichnet,**
**daß** die Zentrale ein Anschlußkabel und entsprechende elektronische Bauelemente zum Anschluß an eine Festnetz-Telefonanlage, insbesondere zur Datenübertragung über eine ISDN-Verbindung, und/oder eine Sende- und Empfangseinheit zur drahtlosen Datenübertragung über ein Telefon-Mobilfunknetz aufweist.

14. Fernwartungs- und Videokonferenzsystem nach einem der Ansprüche 11 bis 13, **dadurch gekennzeichnet,**
**daß** die Zentrale zur Ein- bzw. Ausgabe sowie zur Übertragung von akustischer und/oder Steuerinformation ein stationäres oder mobiles Telekommunikations-Endgerät (6) aufweist.

15. Fernwartungs- und Videokonferenzsystem nach einem der Ansprüche 11 bis 14, **dadurch gekennzeichnet,**
**daß** zur Ein- bzw Ausgabe von Fernsteuerbefehlen bzw. Bilddaten eine Datenverarbeitungsanlage verwendet wird, welche einen Monitor (7) zur Bilddarstellung sowie Maus, Joystick und/oder Tastatur als Steuerelement (8) aufweist.

16. Fernwartungs- und Videokonferenzsystem nach einem der Ansprüche 11 bis 15, **dadurch gekennzeichnet,**
**daß** die Zentrale und das Headset jeweils eine Kodier-/Dekodiereinheit (17, 17') aufweisen, mit welcher akustische Signale sowie Steuerinformation, gegebenenfalls nach einer Digitalisierung, zur Übertragung über eine Telefonleitung, insbesondere über einen ISDN-Kanal, bzw. über eine Mobilfunkverbindung kodiert und in das entsprechende Übertragungsformat gebracht werden sowie dem Headset übermittelte Daten dekodiert und in akustische und Steuerinformation getrennt werden, die dem Lautsprecher bzw. der Signalisierungseinheit zugeführt werden.

## Claims

1. Headset (1), in particular for use within a remote maintenance or video conferencing system, having a voice unit (3) with a microphone (19, 19') and loudspeaker/headphones (20, 20') and a camera (4), wherein acoustic signals (10) are input at the microphone and output at the loudspeaker/headphones, image data (11) are recorded with the camera (4), and all data are transmitted wirelessly or through a data line (13),
**characterized by** the following features:
a) a signaling unit (5) with a laser pointer (15), which unit is either permanently integrated in the headset (1) or is detachably attached to the headset (1);
b) the signaling unit (5) can be remotely controlled by means of control signals (12) transmitted to the headset (1) such that it is possible to change the beam direction of the laser pointer;
c) the signaling unit is coupled to the headset during use, even in the detached state, such that the unit is capable of receiving control signals transmitted to the headset.

2. Headset according to claim 1, **characterized in that** the signaling unit (5) has a positioning unit (14) for changing the beam direction of the laser (15), said positioning unit being capable of changing the laser's beam direction in space under remote control via the control signals.

3. Headset according to claim 2, **characterized in that** the positioning unit (14) is an x-y positioning table which is mechanically coupled to the laser (15), wherein the orientation of the laser (15), and thus the laser beam direction in space, can be changed by movements of the positioning table.

4. Headset according to claim 2, **characterized in that** the positioning unit (14) is a mirror or mirror system movable by remote control, by means of which the laser beam can be deflected from the original beam direction when exiting the laser (15).

5. Headset according to any one of the preceding claims, **characterized in that** the operating mode of the laser pointer, e.g. on/off/blinking, can be changed by remote control.

6. Headset according to any one of the preceding claims, **characterized in that** the signaling unit which is detached from the headset is set up in the spatial vicinity of the headset during use and is connected to the headset through a data line.

7. Headset according to any one of the preceding claims, **characterized in that** it has an interface or a connecting cable for connecting to a fixed telephone network.

8. Headset according to any one of claims 1 through 4, **characterized in that** it has a transmitting and receiving unit for wireless data transmission through a mobile radio telephone network.

9. Headset according to any one of the preceding claims, **characterized in that** it has an encoding/decoding unit (17) with which acoustic signals and image data, following digitization if applicable, are encoded for transmission through a telephone line, in particular through an ISDN channel, or for transmission through a mobile radio connection, and are brought into the appropriate transmission format, and with which data transmitted to the headset are decoded and separated into acoustic information and control information that is delivered to the loudspeaker and the signaling unit.

10. Headset according to any one of the preceding claims, **characterized in that** the headset has a stabilizing unit consisting of a motion sensor (21) and stabilizer (22), which unit serves to electronically stabilize the beam direction of the laser pointer in space and compensate for movements of the headset.

11. Remote maintenance and videoconferencing system using a headset (1) according to any one of claims 1 through 10, as well as a central office (2) and means for transmitting data between headset and central office, wherein
a) the central office (2) has a microphone (19'), a loudspeaker (20'), and a monitor (7) for input and output of acoustic information and for visualization of image data;
b) the headset and central office can be connected wirelessly or through a data line (13) for data transmission,
c) in the operating state, acoustic information that is input at the microphone (19) of the headset (1) is output at a loudspeaker (20') in the central office, acoustic information that is input at a microphone (19') of the central office is output at the loudspeaker (20) in the headset, and image data recorded by the camera (4) of the headset are displayed on a monitor (7) in the central office in the form of an image,
d) the central office additionally has a control element (8) with which the signaling unit (5) of the headset can be remotely controlled, wherein inputs at the control element or movement of the control element produce corresponding control information that is transmitted to the signaling unit.

12. Remote maintenance and videoconferencing system according to claim 11, **characterized in that** the data transmission between the headset and central office takes place via a transmission station, in particular a data processing system, that is located in the spatial vicinity of the headset.

13. Remote maintenance and videoconferencing system according to claim 11 or 12, **characterized in that** the central office has a connecting cable and appropriate electronic components for connecting to a fixed telephone system, in particular for data transmission through an ISDN connection, and/or has a transmitting and receiving unit for wireless data transmission through a mobile radio telephone network.

14. Remote maintenance and videoconferencing system according to any one of claims 11 through 13, **characterized in that** the central office has a stationary or mobile telecommunications terminal (6) for input and output and for transmission of acoustic and/or control information.

15. Remote maintenance and videoconferencing system according to any one of claims 11 through 14, **characterized in that** a data processing system having a monitor (7) for displaying images, and having a mouse, joystick and/or keyboard as the control element (8), is used for input and output of remote control commands and image data.

16. Remote maintenance and videoconferencing system according to any one of claims 11 through 15, **characterized in that** the central office and the headset each have an encoding/decoding unit (17, 17') with which acoustic signals and control information, following digitization if applicable, are encoded for transmission through a telephone line, in particular through an ISDN channel, or for transmission through a mobile radio connection, and are brought into the appropriate transmission format, and with which data transmitted to the headset are decoded and separated into acoustic information and control information that is delivered to the loudspeaker and the signaling unit.

## Revendications

1. Casque (1), notamment destiné à être utilisé dans un système de maintenance à distance ou de visioconférence, comportant une unité vocale (3) avec microphone (19, 19') et haut-parleur/écouteur (20, 20') et une caméra (4), des signaux sonores (10) étant entrés au niveau du microphone ou restitués par le haut-parleur/écouteur, des données d'image (11) étant enregistrées à l'aide de la caméra (4) et l'ensemble des données étant transmises sans fil ou par l'intermédiaire d'une ligne de données (13),
**caractérisé en ce que** :
a) une unité de signalisation (5) dotée d'un pointeur laser (15) est intégrée de manière fixe au casque (1) ou fixée de manière détachable sur le casque (1) ;
b) des signaux de commande (12) transmis au casque (1) permettent de commander à distance l'unité de signalisation (5) de manière à faire varier la direction du faisceau du pointeur laser ;
c) dans l'exemple d'application, l'unité de signalisation (5) est couplée au casque, même si elle en est détachée, de manière à être capable de recevoir des signaux de commande transmis au casque.

2. Casque selon la revendication 1, **caractérisé en ce que**
l'unité de signalisation (5) pour la variation de la direction du faisceau du laser (15) comporte une unité de positionnement (14) qui, commandée à distance par les signaux de commande, est capable de faire varier la direction du faisceau du laser dans l'espace.

3. Casque selon la revendication 2, **caractérisé en ce que**
l'unité de positionnement (14) est une table de translation xy couplée mécaniquement au laser (15), les mouvements de la table de translation permettant de faire varier l'orientation du laser (15) et, par conséquent, la direction du faisceau laser dans l'espace.

4. Casque selon la revendication 2, **caractérisé en ce que**
l'unité de positionnement (14) est un miroir mobile commandable à distance ou un système de miroir au moyen duquel le faisceau laser peut être dévié de la direction initiale du faisceau à la sortie du laser (15).

5. Casque selon l'une des revendications précédentes, **caractérisé en ce que**
le mode de fonctionnement du pointeur laser, tel que marche/arrêt/clignotant, est variable par commande à distance.

6. Casque selon l'une des revendications précédentes, **caractérisé en ce que**,
dans l'exemple d'application, l'unité de signalisation détachée du casque est placée à proximité spatiale du casque et reliée à ce dernier par une ligne de données.

7. Casque selon l'une des revendications précédentes, **caractérisé en ce**
**qu'**il comporte une interface ou un câble de raccordement pour le raccordement à un réseau téléphonique fixe.

8. Casque selon l'une des revendications 1 à 4, **caractérisé en ce**
**qu'**il comporte une unité d'émission et de réception pour la transmission de données sans fil par l'intermédiaire d'un réseau de radiocommunications avec les mobiles.

9. Casque selon l'une des revendications précédentes, **caractérisé en ce**
**qu'**il comporte une unité de codage/décodage (17) destinée à coder des signaux sonores ainsi que des données d'image, le cas échéant après numérisation, pour la transmission par l'intermédiaire d'une ligne téléphonique, notamment d'un canal RNIS ou par l'intermédiaire d'une liaison de radiocommunications avec les mobiles et à les convertir dans le format de transmission correspondant ainsi qu'à décoder des données transmises au casque et à les séparer en informations sonores et de commande envoyées au haut-parleur ou à l'unité de signalisation.

10. Casque selon l'une des revendications précédentes, **caractérisé en ce que**
le casque comporte une unité de stabilisation composée d'un capteur de mouvement (21) et d'un stabilisateur (22) permettant de stabiliser électroniquement la direction du faisceau du pointeur laser dans l'espace et de compenser des mouvements du casque.

11. Système de maintenance à distance et de visioconférence utilisant un casque (1) selon l'une des revendications 1 à 10 ainsi qu'une unité centrale (2) et des moyens de transmission de données entre le casque et l'unité centrale,
a) l'unité centrale (2) comportant un microphone (19'), un haut-parleur (20') et un moniteur (7) pour entrer ou restituer des informations sonores ainsi que pour visualiser des données d'image ;
b) le casque et l'unité centrale pouvant être couplés sans fil ou par l'intermédiaire d'une ligne de données (13) pour la transmission de données,
c) à l'état de fonctionnement, des informations sonores entrées au niveau du microphone (19) du casque (1) pouvant être restituées au niveau d'un haut-parleur (20') dans l'unité centrale, des informations sonores entrées au niveau d'un microphone (19') de l'unité centrale pouvant être restituées au niveau du haut-parleur (20) du casque et des données d'image enregistrées par la caméra (4) du casque pouvant être affichées sur un moniteur (7) dans l'unité centrale sous la forme d'une image,
d) l'unité centrale comportant en outre un élément de commande (8) permettant de commander à distance l'unité de signalisation (5) du casque, des entrées au niveau de l'élément de commande ou le mouvement de l'élément de commande générant une information de commande correspondante transmise à l'unité de signalisation.

12. Système de maintenance à distance et de visioconférence selon la revendication 11,
**caractérisé en ce que**
la transmission de données entre le casque et l'unité centrale s'effectue par l'intermédiaire d'une station de transmission, notamment un module de traitement de données situé à proximité spatiale du casque.

13. Système de maintenance à distance et de visioconférence selon la revendication 11 ou 12, **caractérisé en ce que**
l'unité centrale comporte un câble de raccordement et des composants électroniques appropriés pour le raccordement à une installation téléphonique de réseau fixe, notamment pour la transmission de données par l'intermédiaire d'une liaison RNIS, et/ou une unité d'émission et de réception pour la transmission de données sans fil par l'intermédiaire d'un réseau de radiocommunications avec les mobiles.

14. Système de maintenance à distance et de visioconférence selon l'une des revendications 11 à 13, **caractérisé en ce que**
l'unité centrale comporte un terminal de télécommunications (6) fixe ou mobile pour l'entrée ou la restitution ainsi que pour la transmission d'une information sonore et/ou de commande.

15. Système de maintenance à distance et de visioconférence selon l'une des revendications 11 à 14, **caractérisé en ce**
**qu'**il utilise, pour entrer ou restituer des consignes de commande à distance ou des données d'image, un module de traitement de données comportant un moniteur (7) pour l'affichage d'images ainsi qu'une souris, une manette de commande et/ou un clavier comme élément de commande (8).

16. Système de maintenance à distance et de visioconférence selon l'une des revendications 11 à 15, **caractérisé en ce que**
l'unité centrale et le casque comportent chacun une unité de codage/décodage (17, 17') destinée à coder des signaux sonores ainsi qu'une information de commande, le cas échéant après une numérisation, pour la transmission par l'intermédiaire d'une ligne téléphonique, notamment d'un canal RNIS, ou par l'intermédiaire d'une liaison de radiocommunications avec les mobiles et à les convertir dans le format de transmission correspondant, ainsi qu'à décoder des données transmises au casque et à les séparer en informations sonores et de commande envoyées au haut-parleur ou à l'unité de signalisation.
